(19) Europäisches Patentamt / European Patent Office / Office européen des brevets

(11) **EP 2 870 052 B1**

(12) **FASCICULE DE BREVET EUROPEEN**

(45) Date de publication et mention
de la délivrance du brevet:
**20.07.2016 Bulletin 2016/29**

(21) Numéro de dépôt: **13733377.9**

(22) Date de dépôt: **10.06.2013**

(51) Int Cl.:
**B62D 15/02** *(2006.01)*

(86) Numéro de dépôt international:
**PCT/FR2013/051336**

(87) Numéro de publication internationale:
**WO 2014/006289 (09.01.2014 Gazette 2014/02)**

(54) **PROCÉDÉ AMÉLIORÉ DE DÉTERMINATION DE LA POSITION ANGULAIRE ABSOLUE DU VOLANT DE DIRECTION D'UN VÉHICULE AUTOMOBILE**

VERBESSERTES VERFAHREN ZUR BESTIMMUNG DER ABSOLUTEN WINKELSTELLUNG DES LENKRADES EINES KRAFTFAHRZEUGS

IMPROVED METHOD FOR DETERMINING THE ABSOLUTE ANGULAR POSITION OF THE STEERING WHEEL OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2012 FR 1256521**

(43) Date de publication de la demande:
**13.05.2015 Bulletin 2015/20**

(73) Titulaire: **JTEKT Europe**
**69540 Irigny (FR)**

(72) Inventeur: **MORETTI, Romain**
**F-69510 Soucieu En Jarrest (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 1 375 304          DE-A1-102007 021 625**
**DE-A1-102008 063 567      FR-A1- 2 953 181**

## Description

La présente invention se rapporte au domaine général des dispositifs de direction assistée, et notamment de direction assistée électrique, destinés à faciliter la manoeuvre des véhicules automobiles.

Elle concerne plus particulièrement un procédé de détermination de la position absolue du volant de direction pour les véhicules équipés d'une telle direction assistée.

Cette information de position angulaire du volant peut en effet être nécessaire à l'accomplissement de diverses fonctions embarquées, telles que le retour automatique de la direction au point milieu, le contrôle des indicateurs de changement de direction ou de l'orientation de feux directionnels, l'assistance intelligente au stationnement, etc.

A ce titre, il est connu, par la demande de brevet FR-2 953 181, déposée par la demanderesse, d'utiliser un algorithme qui permet de définir la position absolue instantanée, multi-tours, du volant.

Selon cet algorithme, on mesure tout d'abord la position angulaire relative dudit volant, au moyen d'un capteur de type « resolver » placé sur l'arbre du moteur d'assistance couplé à la colonne de direction, puis on ajoute à cette mesure relative, pour obtenir la position absolue du volant, une valeur corrective de décalage (« offset ») qui est calculée comme étant la moyenne pondérée des écarts successivement constatés, au fur et à mesure des itérations, entre d'une part la valeur de position angulaire relative mesurée lors de l'itération considérée, et d'autre part une estimation de la position angulaire absolue du volant, obtenue indirectement par application de lois faisant intervenir des paramètres dynamiques de roulage, tel que l'écart de vitesse entre les roues arrière, renseigné par le système antiblocage de roues ABS, ou encore la vitesse instantanée de lacet, fournie par le système de contrôle de trajectoire ESP.

A ces écarts sont attribués, pour le calcul du décalage finalement retenu, des coefficients de pondération qui peuvent s'interpréter comme un indice de confiance quant à la précision de l'estimation de la position angulaire absolue, selon les conditions de roulage et l'origine du paramètre utilisé pour le calcul.

Un tel algorithme, dit d'« *angle finding »,* présente d'indéniables avantages, notamment en ce qu'il permet de s'affranchir de la présence d'un capteur supplémentaire qui serait destiné à mesurer directement la position angulaire absolue multi-tours du volant, ou encore de la nécessité de faire rouler durablement le véhicule dans des conditions particulières, et notamment en ligne droite, pour permettre l'initialisation du processus de détermination de ladite position angulaire absolue.

Toutefois, ledit algorithme peut parfois, notamment dans certains cas extrêmes, voir sa précision dégradée du fait que l'un ou l'autre des modèles dynamiques utilisés atteignent leurs limites de validité.

Les objets assignés à l'invention visent par conséquent à remédier aux inconvénients susmentionnés et à proposer un procédé amélioré de détermination de la position angulaire du volant d'un véhicule, qui présente une précision, une fiabilité et une robustesse accrues, tout en conservant une relative simplicité de mise en oeuvre.

Les objets assignés à l'invention sont atteints au moyen d'un procédé de détermination de la position angulaire absolue d'un volant de direction de véhicule caractérisé en ce qu'il comprend une étape (a) de première estimation de position absolue au cours de laquelle on évalue une première valeur représentative de la position angulaire absolue dudit volant au moyen d'un premier modèle reposant sur l'analyse d'au moins un premier paramètre dynamique de roulage du véhicule, une étape (b) de seconde estimation de position absolue au cours de laquelle on évalue une seconde valeur représentative de la position angulaire absolue dudit volant au moyen d'un second modèle, distinct du premier modèle et reposant sur l'analyse d'au moins un second paramètre dynamique de roulage du véhicule, puis une étape (c) de vérification au cours de laquelle on calcule la différence entre la première valeur et la seconde valeur et on compare cette différence à un seuil de cohérence prédéterminé.

Avantageusement, la mise en oeuvre d'une étape de vérification selon l'invention permet de vérifier très simplement et rapidement, sans avoir à recourir à d'autres signaux externes, ni a *fortiori* à d'autres capteurs spécifiques, la cohérence entre elles des valeurs de position angulaire résultant de l'application des deux modèles dynamiques distincts.

En effet, les inventeurs ont constaté que, lorsque ces valeurs, issues chacune d'un modèle distinct, sont cohérentes entre elles, c'est-à-dire que l'éventuel écart qui les différencie est inférieur au seuil de cohérence choisi, cela indique que la situation de vie du véhicule, c'est-à-dire les conditions de roulage dans lequel évoluait ledit véhicule à l'instant considéré, étaient effectivement compatibles avec l'application desdits modèles audit instant considéré, et correspondaient bel et bien aux domaines de validité spécifiques desdits modèles permettant de considérer leur résultat comme pertinent, et d'une précision fiable.

*A contrario,* si l'étape de vérification constate un écart entre les deux valeurs représentatives de position angulaire absolue qui est trop élevé, en l'espèce supérieur au seuil de cohérence fixé, cela signifie qu'il existe un véritable risque que l'évaluation obtenue par l'un ou l'autre des modèles soit faussée, et que la valeur calculée ne présente donc pas une précision et une fiabilité suffisantes.

La comparaison de l'écart entre les deux valeurs calculées d'une part et le seuil de cohérence d'autre part permet donc de décider en toute connaissance de cause soit de conserver lesdites valeurs calculées, si celles-ci sont jugées cohérentes entre elles et donc globalement fiables, soit au contraire d'écarter les valeurs jugées douteuses, qui seraient susceptibles de fausser le résultat final de l'algorithme de détermination de la valeur de position absolue du volant.

Plus particulièrement, il sera ainsi envisageable, selon que les valeurs nouvellement calculées apparaissent fiables ou non, de privilégier l'utilisation de ces valeurs pour qu'elles contribuent à affiner le réglage de l'algorithme par apprentissage itératif, ou au contraire de privilégier leur exclusion pour éviter qu'elles ne perturbent ledit apprentissage.

Le cas échéant, en cas d'exclusion des valeurs lors d'une itération, on pourra "geler" l'apprentissage et conserver temporairement l'estimation de position absolue déterminée lors de l'itération précédente, puis reprendre ledit apprentissage lors d'une itération ultérieure, sitôt que seront apportées par les modèles dynamiques de nouvelles valeurs cohérentes.

Ainsi, l'invention permet avantageusement d'améliorer la précision et la robustesse du procédé de détermination de la position absolue du volant, et ce avantageusement de façon simple et rapide, sans alourdir la mise en oeuvre de l'algorithme, et en particulier sans nécessiter la collecte d'informations ou de signaux externes supplémentaires pour vérifier la fiabilité des valeurs calculées.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique en perspective, la mise en oeuvre d'un procédé conforme à l'invention au sein d'un véhicule automobile.

La figure 2 illustre, selon un schéma-bloc fonctionnel, le déroulement d'un procédé conforme à l'invention, notamment des étapes de vérification de cohérence et d'inhibition.

La figure 3 illustre, selon un schéma-bloc fonctionnel, une variante de réalisation de procédé conforme à l'invention couplant deux conditions d'inhibition de l'apprentissage de l'algorithme.

La présente invention concerne un procédé de détermination de la position angulaire absolue d'un volant de direction de véhicule, et plus particulièrement d'un volant de conduite appartenant à un système de direction assistée 1, de préférence à assistance électrique.

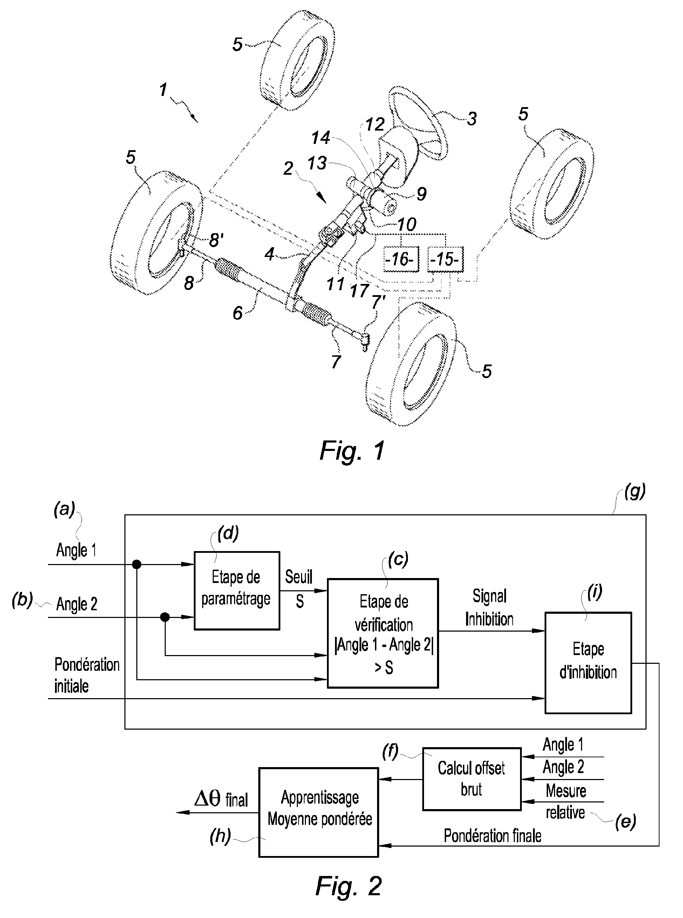

A ce titre, on considérera dans ce qui suit, par commodité, que, tel que cela est représenté sur la figure 1, ladite direction 1 comprend d'une part une partie mécanique, désignée globalement par le repère 2, laquelle comporte un volant de conduite 3 lié à une colonne de direction 4, dont l'extrémité éloignée du volant 3 porte un pignon de direction venant en prise avec une crémaillère (non visible) montée dans un carter de direction 6.

Les deux extrémités opposées de ladite crémaillère sont respectivement liées, par l'intermédiaire de biellettes gauche 7 et droite 8, équipées respectivement à leur extrémité extérieure d'une rotule de direction gauche 7' et droite 8', aux porte-moyeux (non représentés) des roues directrices gauche et droite du véhicule.

Avantageusement, la direction 1 peut comprendre, pour assister l'effort manuel exercé par le conducteur du véhicule sur le volant 3, un moteur électrique d'assistance 9 à double sens de rotation, dont l'arbre de sortie est accouplé, par l'intermédiaire d'un réducteur 10, par exemple à vis sans fin et roue tangente, à la colonne de direction 4, de manière à pouvoir transmettre un couple, moteur ou éventuellement résistant, à ladite colonne de direction 4.

Le moteur électrique d'assistance 9 est piloté par un calculateur électronique embarqué 11 relié à un réseau CAN 17 (Controller Area Network) du véhicule lui permettant de recevoir et de traiter divers signaux en provenance de divers capteurs contrôlant divers paramètres de comportement du véhicule et de ses organes.

Selon une forme de réalisation connue, ledit calculateur 11 peut recevoir un signal électrique issu d'un capteur dédié 12 l'informant sur l'angle relatif, absolu, ou absolu multi-tours, de braquage du volant 3, représentatif de l'angle instantané réel de braquage du véhicule.

Ledit calculateur 11 reçoit également de préférence un signal mesurant le couple exercé par le conducteur sur le volant 3.

Au sens de l'invention, ledit couple volant pourra bien entendu être renseigné par tout moyen d'acquisition approprié. Ainsi, il pourra de préférence être renseigné, et plus particulièrement mesuré directement, par un capteur de couple 13, par exemple placé sur la colonne de direction 4 ou bien en tout autre emplacement approprié. Ledit couple volant pourra également être obtenu indirectement, le cas échéant, par une évaluation reposant sur le traitement, par un calculateur approprié, d'autres signaux disponibles.

A partir de ces informations, le calculateur 11 pilote le moteur d'assistance 9, en imposant à tout moment des consignes appropriées, telles qu'un couple ou un effort d'assistance du moteur 9, pouvant amplifier ou au contraire compenser l'effort appliqué par le conducteur sur le volant, selon des lois d'assistance prédéfinies et programmées dans une mémoire non volatile dudit calculateur 11.

Selon une autre forme de réalisation, particulièrement adaptée au procédé conforme à l'invention, le capteur dédié 12 est supprimé et on utilise l'information d'un capteur angulaire 14 de la direction assistée électrique 1, de type « resolver », associé à l'arbre du moteur d'assistance 9 afin de détecter la position angulaire de ce dernier.

La position angulaire relative multi-tours $\theta_{relatif\_volant}$ du volant 3 peut alors être déterminée par la formule suivante, tel que cela est notamment détaillé dans la demande FR-2 953 181 susmentionnée :

$$\theta_{relatif\_volant} = \frac{\theta_{mono\_élec} + N_{tours\_elec} \times 360}{\Gamma \times p}$$

où :

- $\theta_{mono\_elec}$ représente l'« *angle électrique* » absolu, c'est-à-dire la mesure de position angulaire absolue de l'arbre moteur dans un « *tour électrique* », c'est-à-dire dans un cycle de déplacement compris entre deux pôles statoriques successifs du moteur, et dont la valeur est par convention comprise entre 0 deg et 359 deg « électriques », étant rappelé que la relation entre l'angle électrique et l'angle mécanique du rotor $\theta_{mono\_méca}$ est donnée par $\theta_{mono-élec}$ = $p \times \theta_{mono\_méca}$ ;
- $N_{tours\_elec}$ représente le nombre de tours « électriques » effectués par l'arbre du moteur, cette variable étant incrémentée de 1 (une unité) à chaque passage de $\theta_{mono\_elec}$ de 359 deg à 0 deg, ou décrémentée à chaque passage de $\theta_{mono\_elec}$ de 0 deg à 359 deg ;
- $p$ est le nombre de paires de pôles statoriques du moteur d'assistance 9 ;
- $\Gamma$ est le rapport de réduction du réducteur 10.

On notera que cette mesure relative est de préférence initialisée lors du démarrage du véhicule, le nombre de tour $M_{tours\_elec}$ étant placé à zéro. La valeur de position électrique mono-tour $\theta_{mono\_elec}$ possède quant à elle une valeur initiale qui peut être comprise entre 0 deg et 359 deg, et qui reflète l'orientation du volant au moment dudit démarrage.

Ainsi, au démarrage (à l'initialisation), la mesure initiale de position angulaire relative multi-tours du volant $\theta_{relatif\_volant}$ vaudra :

$$\theta_{relatif\_volant}(0) = \frac{\theta_{mono\_élec}(0)}{\Gamma \times p}$$

La valeur de position angulaire multi-tours ne pourra du reste jamais être supérieure à la course angulaire maximale du volant 3 de butée à butée.

Selon l'invention, tel que cela est notamment illustré sur la figure 2, le procédé comprend une étape (a) de première estimation de position absolue au cours de laquelle on évalue une première valeur *Angle1* représentative de la position angulaire absolue du volant 3 au moyen d'un premier modèle reposant sur l'analyse d'au moins un premier paramètre dynamique de roulage du véhicule, une étape (b) de seconde estimation de position absolue au cours de laquelle on évalue une seconde valeur *Angle2* représentative de la position angulaire absolue dudit volant au moyen d'un second modèle, distinct du premier modèle et reposant sur l'analyse d'au moins un second paramètre dynamique de roulage du véhicule, avantageusement distinct lui-même du premier paramètre, puis une étape (c) de vérification au cours de laquelle on calcule la différence entre la première valeur *Angle1* et la seconde valeur *Angle2* et on compare cette différence à un seuil de cohérence $\underline{S}$ prédéterminé.

De préférence, le premier modèle utilise comme premier paramètre dynamique l'écart de vitesse entre les roues 5 gauche et droite d'au moins un train roulant du véhicule, les valeurs desdites vitesses des roues 5 étant de préférence mises à disposition, en l'occurrence sur le réseau CAN 17, par un système antiblocage de roues (ABS) 15.

Plus particulièrement, ledit modèle peut se baser sur l'analyse de Jeantaud-Ackerman, appliquée ici par commodité aux roues arrières, mais valable en utilisant les vitesses d'autres roues.

Ainsi, la vitesse moyenne des roues arrière s'obtient par la formule :

$$V_{moyenne\ arrière} = \frac{V_{roue\ arrière\ gauche} + V_{roue\ arrière\ droite}}{2}$$

L'écart de vitesse $\underline{E}$ des roues arrière s'écrit alors :

$$E_{vitesse\ arrière} = V_{roue\ arrière\ gauche} - V_{roue\ arrière\ droite}$$

Le signe de cet écart donne le signe instantané de la direction, par convention positif lorsque le volant 3 est tourné à droite, et négatif lorsque ledit volant est tourné à gauche.

Il est par ailleurs envisageable, le cas échéant, de corriger les vitesses de roues pour tenir compte par exemple d'un roulage avec un pneumatique dégonflé, tel que cela est décrit dans la demande susmentionnée.

Connaissant la valeur constante de la voie arrière du véhicule, le rayon instantané $\underline{R}$ de la trajectoire dudit véhicule est calculé par la formule suivante :

$$R = \frac{V_{moyenne\ arrière}}{E_{vitesse\ arrière}} \times Voie_{arrière}$$

Le rayon $\underline{R}$ étant déterminé, et connaissant l'empattement $\underline{L}$ du véhicule, l'angle d'Ackerman, correspondant à l'angle moyen de braquage des roues directrices, est calculé comme suit :

$$\alpha_{Ackerman} = \frac{L}{R}$$

L'accélération latérale $\gamma_{latérale}$ du véhicule, estimée à partir du rayon instantané et de la vitesse moyenne du véhicule, permet de calculer, connaissant le gradient de sous-virage $\underline{K}$, l'angle moyen théorique de dérive des pneumatiques :

$$\gamma_{latérale} = \frac{(V_{moyenne\ roue\ arrière})^2}{R}$$

$$\alpha_{dérive\ théorique} = K(R) \times \gamma_{latérale}$$

La relation entre le gradient de sous-virage $\underline{K}$ et le rayon de braquage $\underline{R}$ est propre à chaque type de véhicule. Elle peut être avantageusement renseignée sous forme d'un abaque stocké en mémoire non volatile du calculateur.

L'angle de dérive moyen théorique est ensuite corrigé par un gain correcteur $\underline{G}$, qui dépend de l'accélération latérale du véhicule :

$$\alpha_{dérive} = G_{correcteur} \times \alpha_{dérive\ théorique}$$

Finalement, l'angle moyen de braquage des roues directrices est égal à la somme de l'angle d'Ackerman et de l'angle moyen de dérive corrigé des pneumatiques :

$$\alpha_{roues\ directrices} = \alpha_{Ackerman} + \alpha_{dérive}$$

Or, il existe une relation entre la position angulaire absolue du volant *Angle 1* et l'angle de braquage des roues directrices, caractéristique de chaque type de véhicule. Cette relation peut avantageusement être renseignée sous forme d'un abaque stocké en mémoire non volatile dans le calculateur 11 :

$$Angle1 = f(\alpha_{roues\ directrices})$$

De préférence, le second modèle utilise comme second paramètre dynamique la vitesse de lacet du véhicule et/ou l'accélération latérale dudit véhicule, ledit second paramètre étant de préférence mis à disposition par un système de contrôle de trajectoire (ESP) 16.

Il est en effet possible d'obtenir la même relation que celle décrite plus haut, en l'espèce pour la seconde valeur *Angle2,* à partir de l'une et/ou l'autre de ces informations de vitesse de lacet ou d'accélération latérale périodiquement fournies au calculateur 11 par l'ESP.

Ainsi, le rayon instantané $\underline{R}$ de la trajectoire du véhicule roulant à une vitesse $\underline{V}$ peut être calculé à partir de la vitesse de lacet $\psi'$ dudit véhicule, par la formule :

$$R = \frac{V_{véhicule}}{\psi'}$$

et/ou à partir de l'accélération latérale dudit véhicule, par la formule :

$$R = \frac{(V_{véhicule})^2}{\gamma_{latérale}}$$

Connaissant la valeur du rayon $\underline{R}$, le processus de détermination présenté ci-dessus s'applique alors *mutatis mutandis* pour obtenir l'angle de braquage des roues puis en déduire la (seconde) valeur de position angulaire du volant *Angle2.*

Avantageusement, les modèles utilisés permettent de calculer une estimation de la position angulaire absolue de l'angle du volant au moyen de signaux déjà disponibles sur le réseau de bord CAN, sans requérir par exemple de capteur dédié, ce qui allège et simplifie l'agencement de la direction assistée 1 et la mise en oeuvre du procédé.

Une fois calculées les valeurs représentatives de la position absolue du volant par les modèles dynamiques, on teste ensuite, lors de l'étape (c) de vérification, la cohérence entre ces deux valeurs *Angle1, Angle2,* estimées chacune selon un modèle différent mais censées représenter toutes deux la même grandeur physique de position angulaire absolue du volant.

Par ailleurs, de façon particulièrement préférentielle, le procédé conforme à l'invention comporte une étape (d) de paramétrage au cours de laquelle on règle, préalablement à l'étape de vérification, et postérieurement aux étapes (a) et (b) d'estimation de position absolue, le seuil de cohérence $\underline{S}$ en fonction de la plus faible des première et seconde valeurs représentatives de la position angulaire absolue du volant, c'est-à-dire en fonction de MIN [*Angle1 ; Angle2*].

Ainsi, on peut avantageusement ajuster finement la sensibilité et la sévérité de la vérification, et par conséquent la précision et la fiabilité de l'algorithme, en modifiant en temps réel le seuil de cohérence $\underline{S}$, qui constitue le critère de décision quant à la fiabilité des valeurs de position absolue estimées, afin d'adapter ledit seuil à l'ordre de grandeur de la plus petite desdites valeurs de position absolue *Angle1*, *Angle2* estimées lors de l'itération considérée.

En particulier, on pourra, en présence d'une valeur minimale de position absolue faible, abaisser ledit seuil $\underline{S}$ afin de rendre le test de cohérence plus restrictif, et au contraire relever ledit seuil $\underline{S}$ lorsqu'on se trouve en présence d'une valeur minimale plus grande.

A titre d'exemple, si la plus petite des valeurs représentative de position absolue MIN [*Angle1 ; Angle2*] correspond à un angle inférieur à 100 deg, un écart allant jusqu'à 5 deg voire 15 deg pourra être toléré entre la première et la seconde valeur, le seuil $\underline{S}$ pouvant ainsi être sensiblement compris entre 5 deg et 15 deg.

Si ladite plus petite valeur correspond à un angle supérieur à 360 deg, on pourra tolérer un écart allant jusqu'à 30 deg, voire 40 deg.

Entre 100 deg et 360 deg, en première approximation, une loi d'interpolation, par exemple linéaire, pourra être utilisée pour fixer le seuil.

Ces valeurs sont toutefois susceptibles d'évoluer en fonction du compromis performance/robustesse recherché.

De préférence, le procédé conforme à l'invention comprend une étape (e) de mesure de position angulaire relative $\theta_{relatif\_volant}$ au cours de laquelle on relève, à l'aide d'un capteur embarqué 14, de préférence initialisé lors du démarrage du véhicule, une valeur représentative de la position angulaire relative multi-tours $\theta_{relatif\_volant}$ du volant 3, tel que cela a été détaillé plus haut.

Plus particulièrement, la valeur représentative de la position angulaire relative $\theta_{relatif\_volant}$ pourra être mesurée par un capteur de position angulaire de type « resolver », ou un quelconque capteur inductif analogue, associé à l'arbre du moteur d'assistance de direction 9.

Ledit procédé comporte ensuite de préférence une étape (f) de calcul d'offset dynamique brut $\Delta\theta_{dynamique(i)}$, au cours de laquelle on calcule une première valeur d'offset dynamique $\Delta\theta_{dynamique(1)}$, respectivement une seconde valeur d'offset dynamique $\Delta\theta_{dynamique(2)}$, correspondant à la différence entre la première valeur *Angle1* représentative de la position angulaire absolue, respectivement la seconde valeur *Angle2* représentative de position angulaire absolue, et la valeur représentative de la position relative $\theta_{relatif\_volant}$ mesurée pour l'itération $\underline{n}$ en cours :

$$\Delta\theta_{dynamique(i)} = Angle(i) - \theta_{relatif\_volant}$$

Le procédé comporte ensuite de préférence une étape (g) de pondération au cours de laquelle on affecte à chaque valeur d'offset dynamique $\Delta\theta_{dynamique(i)}$, un coefficient de pondération propre *pond$_i$(n),* puis une étape (h) d'apprentissage où l'on calcule une valeur finale d'offset $\Delta\theta_{final}(n)$ pour l'itération $\underline{n}$ en cours, qui correspond à la moyenne pondérée de la valeur d'offset final calculée lors de l'itération précédente $\Delta\theta_{final}(n\text{-}1)$ et affectée du score $sc(n\text{-}1)$ correspondant à la somme intégrale des coefficients de pondération successivement utilisés sur l'ensemble des itérations précédentes d'une part, et des première et seconde valeurs d'offset dynamique nouvellement calculées pour l'itération en cours $\Delta\theta_{dynamique(i)}(n)$ et affectées de leur coefficient de pondération respectif $pond_i(n)$ d'autre part, ce qui peut s'écrire :

$$\Delta\theta_{final}(n) = \frac{\Delta\theta_{final}(n-1) \times sc(n-1) + \sum_{i=1}^{2} \Delta\theta_{dynamique(i)} \times pond_i(n)}{sc(n-1) + \sum_{i=1}^{2} pond_i(n)}$$

$$sc(n) = sc(n-1) + \sum_{i=1}^{2} pond_i(n)$$

Ainsi, la valeur d'offset $\Delta\theta_{final}(n)$ finalement retenue comme représentative du décalage entre la position absolue multi-tours $\theta_{absolue\_multitours\_volant}$ réelle du volant et la position angulaire relative $\theta_{relatif\_volant}$ mesurée par le capteur 14 correspond à un apprentissage de type moyenne pondérée, dont la valeur évolue et s'affine au fur et à mesure des itérations, grâce à l'apport successif des différentes valeurs pondérées intermédiaires $\Delta\theta_{dynamique(i)} \times pond_i(n)$, estimées par les modèles dynamiques.

En définitive, lors de l'itération $\underline{n}$, la position absolue multi-tours du volant est considérée comme la somme de la valeur relative mesurée et de la valeur d'offset final:

$$\theta_{absolue\ multitours\ volant}(n) = \theta_{relatif\_volant}(n) + \Delta\theta_{final}(n)$$

De façon particulièrement préférentielle, le procédé comprend, lorsque la différence |*Angle1 - Angle 2*| entre la première valeur et la seconde valeur représentatives de la position angulaire absolue dudit volant dépasse le seuil de cohérence $\underline{S}$ prédéterminé, une étape (i) d'inhibition qui force la mise à zéro du, et plus particulièrement des (deux) coefficient(s) de pondération $pond_1(n)$, $pond_2(n)$ associé(s) à la, ou plus particulièrement aux valeur(s) d'offset dynamique $\Delta\theta_{dynamique(1)}$, $\Delta\theta_{dynamique(2)}$, correspondante(s), pour l'exécution de l'étape (h) d'apprentissage.

En d'autres termes l'étape d'inhibition permet, par l'annulation des coefficients de pondération (*$pond_i(n)=0$*) lors de l'itération $\underline{n}$ concerné, de forcer l'élimination des valeurs d'offset concernées.

Une telle sélection permet avantageusement de ne conserver, dans l'expression servant au calcul de la moyenne pondérée, que les termes de valeurs d'offset (et donc, indirectement, d'angle absolu qu'elles représentent) qui sont considérés comme cohérents, et donc fiables, et qui sont affectés à ce titre d'un coefficient de pondération non nul, et d'exclure en revanche, par une pondération nulle, les termes jugés douteux, correspondant à des valeurs jugées peu fiables car résultant *a priori* de l'application de l'un et/ou l'autre des modèles dynamiques à une situation de vie du véhicule particulière, située en limite voire au-delà du domaine de validité ou de précision acceptable du modèle considéré, les valeurs calculées étant alors potentiellement trop imprécises ou assorties d'une trop grande incertitude.

En d'autres termes, l'invention propose avantageusement, plus globalement, un procédé comprenant au moins une, et de préférence deux, étapes (a, b) d'estimation de position absolue, une étape de vérification (c) de la cohérence de la ou des valeurs représentatives de la position angulaire absolue du volant ainsi estimées, puis une étape d'inhibition (i) permettant d'exclure, de préférence par une pondération sélective appropriée, la ou les valeurs ainsi estimées si celles-ci sont jugées incohérentes, afin de ne pas tenir compte de valeurs incertaines dans l'appréciation de la situation du véhicule et de l'état de la direction.

Dans la forme préférée de réalisation, deux étapes (a, b) d'estimation, par deux modèles dynamiques distincts, sont nécessaires, la vérification (c) de cohérence mutuelle des valeurs représentatives de la position angulaire absolue du volant s'opérant justement par comparaison entre elles desdites deux valeurs ainsi obtenues par des modélisations différentes.

De même, dans cette forme préférée de réalisation, la détection d'une incohérence entre la première et la seconde valeur a pour conséquence l'annulation des deux coefficients de pondération associés, et donc l'élimination pure et simple du calcul d'apprentissage par moyenne pondérée de chacune de ces deux valeurs.

On remarquera qu'un tel processus de sélection groupée solidaire, de type tout-ou-rien, permet soit de conserver les deux valeurs, si celles-ci sont cohérentes l'une relativement à l'autre, soit de les éliminer toutes les deux, si elles sont incohérentes, sans qu'il soit nécessaire ou même utile de chercher à déterminer dans l'absolu et séparément la fiabilité individuelle de chacune desdites valeurs. Ceci simplifie bien entendu grandement la mise en oeuvre de l'invention.

Par défaut, en cas d'inhibition des valeurs estimées lors de l'itération $\underline{n}$ en cours, on conservera l'offset final établi lors de la précédente itération $\Delta\theta_{final}(n-1)$. En pareil cas, l'offset restant fixe, les éventuelles variations de position angulaire absolue du volant survenues entre l'itération précédente $n-1$ et l'itération en cours $\underline{n}$ seront reflétées par les évolutions constatées entre les valeurs de position relative mesurées, à chaque itération correspondante, par le resolver 14 : $\theta_{relatif\_volant}(n)$ - $\theta_{relatif\_volant}(n-1)$.

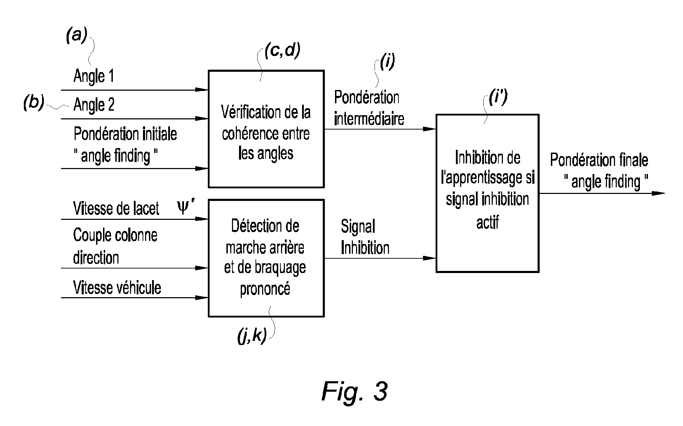

Selon une variante de réalisation qui peut constituer une invention à part entière, le procédé comporte, tel que cela est illustré sur la figure 3, une étape (j) de détection du sens de déplacement longitudinal du véhicule, et une étape (k) de détection d'une situation de braquage au-delà d'un seuil de braquage prédéterminé.

La détection de marche arrière peut notamment s'opérer par la surveillance conjointe d'un premier signal correspondant au couple exercé sur le volant, relevé par exemple par le capteur 13, et d'un second signal correspondant à la vitesse de lacet fournie par l'ESP, une identité de signe entre ces deux signaux indiquant un déplacement en marche avant, une différence de signe entre ces deux signaux indiquant un déplacement en marche arrière, et un changement de signe de la vitesse de lacet signalant, sous réserve du passage par zéro de la vitesse de véhicule, un changement du sens de déplacement.

En effet, les inventeurs ont constaté que le second modèle, lorsqu'il repose sur l'analyse de la vitesse de lacet $\psi'$ du véhicule, peut être imprécis voire erroné, dans une situation de vie défavorable correspondant à la combinaison d'une marche arrière et d'un braquage prononcé, et qu'il est donc utile de détecter une telle situation pour la traiter convenablement.

De ce fait, le procédé peut avantageusement comprendre, lorsqu'une manoeuvre de braquage en marche arrière est détectée, une étape (i') d'inhibition qui force la mise à zéro, pour l'exécution de l'étape (h) d'apprentissage, au moins du coefficient de pondération $pond_2(n)$ associé à la seconde valeur d'offset dynamique $\Delta\theta_{dynamique(2)}$ résultant de l'application du second modèle utilisant comme second paramètre dynamique la vitesse de lacet $\psi'$, voire de l'ensemble des coefficients de pondération associés aux différentes valeurs estimées par les différents modèles dynamiques.

Ainsi, le procédé peut disposer d'une possibilité d'inhibition (i') supplémentaire, reposant sur la détection du sens de déplacement, et intervenant le cas échéant en série avec une première étape (i) d'inhibition placée sous la dépendance d'une étape (c) de vérification de cohérence telle que décrite plus haut, ce qui renforce encore la fiabilité dudit procédé en écartant les valeurs acquises dans certaines situations de vie défavorables à l'application du modèle concerné.

Bien entendu, les différentes dispositions décrites dans ce qui précède peuvent avantageusement se combiner et se cumuler pour renforcer la robustesse et la fiabilité de l'algorithme d'« angle finding ».

Plus particulièrement, les étapes caractéristiques du procédé, et notamment les étapes (c) de vérification, (i) et/ou (i') d'inhibition, voire (j) et (k) de détection de braquage en marche arrière, pourront avantageusement être insérées, le cas échéant, en rattrapage, sur un algorithme d'« angle finding » de première génération, pour compléter ce dernier en lui adjoignant une ou des fonctions d'inhibition conditionnelle, permettant de modifier, et plus particulièrement d'annuler, en cas de détection d'une incohérence et/ou d'un risque de défaut de fiabilité du modèle, les coefficients de pondération initiaux (« pondération initiale ») que ledit algorithme propose normalement, sur la base d'abaques (« tables de scores ») prédéterminés, tel que cela est décrit dans la demande FR-2 953 181.

Ainsi, selon que les valeurs de position absolue *Angle1, Angle2* estimées par les modèles dynamiques seront jugées cohérentes ou non, les coefficients de pondération initiaux pourront être conservés, ou au contraire annulés, le résultat consistant en la « pondération finale » indiquée sur les figures 2 et 3, pondération finale qui est alors prise en considération pour l'exécution de l'étape (h) d'apprentissage.

Avantageusement, le procédé conforme à l'invention présente ainsi une fiabilité et une précision accrues, reposant notamment sur la complémentarité de la pluralité de modèles dynamiques utilisés, qui permet un autocontrôle de la cohérence des résultats qui sont obtenus en application desdits modèles.

Bien entendu, l'invention n'est nullement limitée à une variante de réalisation particulière, l'homme du métier ayant notamment la possibilité d'isoler ou de combiner entre elles les différentes caractéristiques décrites plus haut, et par exemple d'employer d'autres modèles, notamment dynamiques, permettant de déterminer indirectement, à partir de tout signal utile présent sur le réseau de bord 17, une estimation de la position angulaire absolue du volant 3.

Par ailleurs, la présente invention concerne bien entendu également un véhicule automobile, et notamment un véhicule automobile terrestre destiné au transport individuel ou collectif de personnes ou de marchandises, qui embarque un calculateur 11 agencé ou programmé pour mettre en oeuvre un procédé tel que décrit plus haut.

L'invention concerne enfin un programme informatique contenant des éléments de code de programme informatique permettant la mise en oeuvre d'un procédé conforme à l'invention lorsque ledit programme est exécuté sur un calculateur, ainsi qu'un support de données lisible par un calculateur 11, du genre disque, mémoire flash, clef USB, etc. contenant des éléments de code de programme informatique permettant la mise en oeuvre d'un tel procédé lorsque ledit support est lu par un calculateur.

**Revendications**

1. Procédé de détermination de la position angulaire absolue d'un volant (3) de direction de véhicule **caractérisé en ce qu'**il comprend une étape (a) de première estimation de position absolue au cours de laquelle on évalue une première valeur *(Angle1)* représentative de la position angulaire absolue dudit volant (3) au moyen d'un premier modèle reposant sur l'analyse d'au moins un premier paramètre dynamique de roulage du véhicule, une étape (b) de seconde estimation de position absolue au cours de laquelle on évalue une seconde valeur *(Angle2)* représentative de la position angulaire absolue dudit volant au moyen d'un second modèle, distinct du premier modèle et reposant sur l'analyse d'au moins un second paramètre dynamique de roulage du véhicule, puis une étape (c) de vérification au cours de laquelle on calcule la différence entre la première valeur *(Angle1)* et la seconde valeur *(Angle2)* et on compare cette différence à un seuil de cohérence (S) prédéterminé.

2. Procédé selon la revendication 1 **caractérisé en ce qu'**il comporte une étape (d) de paramétrage au cours de laquelle on règle, préalablement à l'étape de vérification, le seuil de cohérence (S) en fonction de la plus faible des première et seconde valeurs représentatives de la position angulaire absolue du volant (MIN *[Angle1 ; Angle2])*.

3. Procédé selon la revendication 1 ou 2 **caractérisé en ce qu'**il comprend une étape (e) de mesure de position angulaire relative au cours de laquelle on relève, à l'aide d'un capteur embarqué (14), de préférence initialisé lors du démarrage du véhicule, une valeur représentative de la position angulaire relative multi-tours ($\theta_{relatif\_volant}$) du volant (3), puis une étape (f) de calcul d'offset dynamique brut, au cours de laquelle on calcule une première valeur d'offset dynamique ($\Delta\theta_{dynamique(1)}$), respectivement une seconde valeur d'offset dynamique ($\Delta\theta_{dynamique(2)}$), correspondant à la différence entre la première valeur *(Angle1)* représentative de la position angulaire absolue, respectivement la seconde valeur *(Angle2)* représentative de position angulaire absolue, et la valeur représentative de la position relative ($\theta_{relatif\_volant}$) mesurée pour l'itération (n) en cours, puis une étape (g) de pondération au cours de laquelle on affecte à chaque valeur d'offset dynamique un coefficient de pondération propre *(pond$_i$(n)),* puis une étape (h) d'apprentissage où l'on calcule une valeur finale d'offset *($\Delta\theta_{final}(n)$)* pour l'itération (n) en cours, qui correspond à la moyenne pondérée de la valeur d'offset final calculée lors de l'itération précédente *($\Delta\theta_{final}(n-1)$)* et affectée du score *(sc(n-1))* correspondant à la somme intégrale des coefficients de pondération successivement utilisés sur l'ensemble des itérations précédentes d'une part, et des première et seconde valeurs d'offset dynamique nouvellement calculées pour l'itération en cours ($\Delta\theta_{dynamique(i)}(n)$) et affectées de leur coefficient de pondération respectif *(pond$_i$(n))* d'autre part.

4. Procédé selon la revendication 3 **caractérisé en ce qu'**il comprend, lorsque la différence (|*Angle1 - Angle 2*|) entre la première valeur et la seconde valeur représentatives de la position angulaire absolue dudit volant dépasse le seuil de cohérence (S) prédéterminé, une étape (i) d'inhibition qui force la mise à zéro des coefficients de pondération *(pond$_1$(n), pond$_2$(n))* associés aux valeurs d'offset dynamique ($\Delta\theta_{dynamique(1)}$, $\Delta\theta_{dynamique(2)}$) correspondantes, pour l'exécution de l'étape (h) d'apprentissage.

5. Procédé selon l'une des revendications 3 ou 4 **caractérisé en ce que** la valeur représentative de la position angulaire relative est mesurée par un capteur de position angulaire (14) de type « resolver » associé à l'arbre du moteur d'assistance de direction (9).

6. Procédé selon l'une des revendications précédentes **caractérisé en ce que** le premier modèle utilise comme premier paramètre dynamique l'écart de vitesse (E) entre les roues (5) gauche et droite d'au moins un train roulant du véhicule, les valeurs desdites vitesses étant de préférence mises à disposition par un système antiblocage de roues ABS (15).

7. Procédé selon l'une des revendications précédentes **caractérisé en ce que** le second modèle utilise comme second paramètre dynamique la vitesse de lacet ($\psi'$) du véhicule et/ou l'accélération latérale ($\gamma_{latérale}$) dudit véhicule, ledit second paramètre étant de préférence mis à disposition par un système de contrôle de trajectoire ESP (16).

8. Procédé selon les revendications 3 et 7 **caractérisé en ce qu'**il comporte une étape (j) de détection du sens de déplacement longitudinal du véhicule, et une étape (k) de détection d'une situation de braquage au-delà d'un seuil de braquage prédéterminé, et **en ce qu'**il comprend, lorsqu'une manoeuvre de braquage en marche arrière est détectée, une étape (i') d'inhibition qui force la mise à zéro, pour l'exécution de l'étape d'apprentissage, du coefficient de pondération *(pond$_2$(n))* associé à la seconde valeur d'offset dynamique ($\Delta\theta_{dynamique(2)}$) résultant de l'application du second modèle utilisant comme second paramètre dynamique la vitesse de lacet.

9. Véhicule automobile **caractérisé en ce qu'**il embarque un calculateur (11) agencé ou programmé pour mettre en oeuvre un procédé selon l'une ou l'autre des revendications 1 à 8.

10. Support de données lisible par un calculateur (11) et contenant des éléments de code de programme informatique permettant la mise en oeuvre d'un procédé selon l'une ou l'autre des revendications 1 à 8 lorsque ledit support est lu par un calculateur.

**Patentansprüche**

1. Verfahren zur Bestimmung der absoluten Winkelposition eines Steuers (3) zur Lenkung eines Fahrzeugs, **dadurch gekennzeichnet, dass** es einen Schritt (a) des ersten Schätzens der absoluten Position umfasst, im Laufe dessen ein erster Wert (*Angle1*), der repräsentativ für die absolute Winkelposition des Steuers (3) ist, mit Hilfe eines ersten Modells bewertet wird, das auf der Analyse von mindestens einem ersten dynamischen Parameter des Rollens des Fahrzeugs beruht, einen Schritt (b) des zweiten Schätzens der absoluten Position, im Laufe dessen ein zweiter Wert *(Angle2),* der repräsentativ für die absolute Winkelposition des Steuers ist, mit Hilfe eines zweiten Modells bewertet wird, das verschieden vom ersten Modell ist und auf der Analyse von mindestens einem zweiten dynamischen Parameter des Rollens des Fahrzeugs beruht, dann einen Schritt (c) des Überprüfens, im Laufe dessen die Differenz zwischen dem ersten Wert (*Angle1*) und dem zweiten Wert *(Angle2)* berechnet und diese Differenz mit einer vorbestimmten Kohärenzschwelle (S) verglichen wird.

2. Verfahren nach Anspruch 1, **dadurch gekennzeichnet, dass** es einen Schritt des Parametrierens (d) umfasst, im Laufe dessen vor dem Schritt des Überprüfens die Kohärenzschwelle (S) in Funktion des kleinsten des ersten und zweiten Werts (MIN [*Angle1*; *Angle2*]) reguliert wird, die für den absoluten Winkelwert des Steuers repräsentativ sind.

3. Verfahren nach Anspruch 1 oder 2, **dadurch gekennzeichnet, dass** es einen Schritt (e) des Messens der relativen Winkelposition umfasst, im Laufe dessen mit Hilfe eines Bord-Sensors (14), vorzugsweise initialisiert beim Starten des Fahrzeugs, ein Wert erfasst wird, der für die relative Multiturn - Winkelposition ($\theta_{relatif\_volant}$) des Steuers (3) repräsentativ ist, dann einen Schritt (f) des Berechnens des dynamischen Brutto-Offsets, im Laufe dessen ein erster dynamischer Offset-Wert ($\Delta\theta_{dynamique(1)}$) bzw. ein zweiter dynamischer Offset-Wert ($\Delta\theta_{dynamique(2)}$) berechnet wird, der der Differenz zwischen dem ersten Wert (*Angle1*), der für die absolute Winkelposition repräsentativ ist, bzw. dem zweiten Wert *(Angle2),* der für die absolute Winkelposition repräsentativ ist, und dem Wert entspricht, der repräsentativ für die relative Position ($\theta_{relatif\_volant}$) ist, die für die laufende Iteration (n) gemessen wird, dann einen Schritt (g) der Gewichtung, im Laufe dessen jedem dynamischen Offset-Wert ein eigener Gewichtungskoeffizient ($pond_i(n)$) zugewiesen wird, dann einen Schritt (h) des Lernens, bei dem ein endgültiger Offset-Wert ($\Delta\theta_{final}(n)$ für die laufende Iteration (n) berechnet wird, der dem gewichteten Mittelwert des endgültigen Offset-Werts entspricht, berechnet bei der vorhergehenden Iteration ($\Delta\theta_{final(n)}$) und zugeordnet dem Score (sc(n-1)), der der integralen Summe der Gewichtungskoeffizienten entspricht, die aufeinander folgend auf der Gesamtheit der vorhergehenden Iterationen einerseits und der ersten und zweiten dynamischen Offset-Werte ($\Delta\theta_{dynamique(1)}(n)$), die neu für die Laufende Iteration berechnet und ihrem entsprechenden Gewichtungskoeffizienten ($pond_i(n)$) zugewiesen werden, andererseits, verwendet werden.

4. Verfahren nach Anspruch 3, **dadurch gekennzeichnet, dass** es, wenn die Differenz (|*Angle1 -Angle2*)| zwischen dem ersten Wert und dem zweiten Wert, die repräsentativ für die absolute Winkelposition des Steuers sind, die vorbestimmte Kohärenzschwelle (S) überschreitet, einen Schritt (i) des Hemmens umfasst, der das Setzen der Gewichtungskoeffizienten ($pond_1(n)$, $pond_2(n)$), die mit den entsprechenden dynamischen Offset-Werten ($\Delta\theta_{dynamique(1)}$, ($\Delta\theta_{dynamique(2)}$) assoziiert sind, für die Durchführung des Schritts (h) des Lernens auf Null erzwingt.

5. Verfahren nach einem der Ansprüche 3 oder 4, **dadurch gekennzeichnet, dass** der repräsentative Wert der relativen Winkelposition durch einen Sensor der Winkelposition (14) vom Typ "Resolver" gemessen wird, der mit der Welle des Servomotors (9) assoziiert ist.

6. Verfahren nach einem der vorhergehenden Ansprüche, **dadurch gekennzeichnet, dass** das erste Modell als ersten dynamischen Parameter die Geschwindigkeitsabweichung (E) zwischen den linken und rechten Rädern (5) mindestens eines Fahrwerks des Fahrzeugs verwendet, wobei die Werte der Geschwindigkeiten vorzugsweise von einem Antiblockiersystem der Räder ABS (15) zur Verfügung gestellt werden.

7. Verfahren nach einem der vorhergehenden Ansprüche, **dadurch gekennzeichnet, dass** das zweite Modell als zweiten dynamischen Parameter die Giergeschwindigkeit ($\psi$') des Fahrzeugs und/oder die seitliche Beschleunigung ($\gamma_{\text{latérale}}$) des Fahrzeugs verwendet, wobei der zweite Parameter vorzugsweise durch ein Fahrdynamikregelungssystem ESP (16) zu Verfügung gestellt wird.

8.  Verfahren nach Anspruch 3 und 7, **dadurch gekennzeichnet, dass** es einen Schritt (j) des Nachweisens der Richtung der Längsbewegung des Fahrzeugs und einen Schritt (k) des Nachweisens einer Einschlagposition über eine vorbestimmte Einschlagschwelle hinaus umfasst, und dadurch, dass es, wenn ein Einschlagmanöver im Rückwärtsgang nachgewiesen wird, einen Schritt (i') des Hemmens umfasst, der das Setzen auf Null zur Durchführung des Schritts des Lernens des Gewichtungskoeffizienten ($pond_2$(n)) erzwingt, der mit dem zweiten dynamischen Offset-Wert ($\Delta\theta_{\text{dynamique(2)}}$) assoziiert ist, der sich aus der Anwendung des zweiten Modells ergibt, das als zweiten dynamischen Parameter die Giergeschwindigkeit verwendet.

9.  Kraftfahrzeug, **dadurch gekennzeichnet, dass** es einen Rechner (11) an Bord (11) hat, der angeordnet oder programmiert ist, um ein Verfahren nach einem der Ansprüche 1 bis 8 durchzuführen.

10. Datenträger, der von einem Rechner (11) gelesen werden kann und Informatik-Programmcodeelemente umfasst, die die Durchführung eines Verfahrens nach einem der Ansprüche 1 bis 8 ermöglichen, wenn der Träger von einem Rechner gelesen wird.

**Claims**

1.  A method for determining the absolute angular position of a steering wheel (3) of a vehicle **characterized in that** it comprises a step (a) of a first estimation of an absolute position during which a first value (*Angle1*) representative of the absolute angular position of said steering wheel (3) is evaluated by means of a first model based on the analysis of at least one first dynamic running parameter of the vehicle, a step (b) of a second estimation of an absolute position during which a second value *(Angle2)* representative of the absolute angular position of said steering wheel is evaluated by means of a second model, distinct from the first model and based on the analysis of at least a second dynamic running parameter of the vehicle, then a verification step (c) during which the difference between the first value (*Angle1*) and the second value *(Angle2)* is calculated and this difference is compared to a predetermined coherence threshold (S).

2.  The method according to claim 1 **characterized in that** it includes a setting step (d) during which, prior to the verification step, the coherence threshold (S) is adjusted depending on the lowest of the first and second values representative of the absolute angular position of the steering wheel (MIN [*Angle1; Angle2*]).

3.  The method according to claim 1 or 2 **characterized in that** it comprises a step (e) of measuring the relative angular position during which a value representative of the multi-turn relative angular position ($\theta_{relatif\_volant}$) of the steering wheel (3) is read by means of an on-board sensor(14) preferably initialized when starting the vehicle, then a step (f) of calculating a raw dynamic offset, during which a first dynamic offset value ($\Delta\theta_{dynamique(1)}$) is calculated, respectively a second dynamic offset value ($\Delta\theta_{dynamique(2)}$), corresponding to the difference between the first value (*Angle1*) representative of the absolute angular position, respectively the second value (Angle2) representative of an absolute angular position, and the value representative of the relative position ($\theta_{relatif\_volant}$) measured for the iteration (n) in progress, then a weighting step (g) during which a specific weighting coefficient ($pond_i(n)$) is assigned to each dynamic offset value, then a learning step (h) wherein an offset final value ($\Delta\theta_{final}(n)$) is calculated for the current iteration (n), which corresponds to the weighted average of the final offset value calculated during the previous iteration ($\Delta\theta_{final}(n-1)$) and multiplied by the score ($sc(n-1)$) corresponding to the entire sum of the weighting coefficients successively used on the set of the previous iterations on the one hand, and of the first and second dynamic offset values newly calculated for the current iteration ($\Delta\theta_{dynamique(i)}(n)$) and multiplied by their respective weighting coefficient ($pond_i(n)$) on the other hand.

4.  The method according to claim 3 **characterized in that** it comprises, when the difference ($|Angle1 - Angle2|$) between the first value and the second value representative of the absolute angular position of said steering wheel exceeds the predetermined coherence threshold (S), an inhibition step (i) which forces the zero setting of the weighting coefficients ($pond_1(n)$, ($pond_2(n)$) associated to the corresponding dynamic offset values ($\Delta\theta_{dynamique(1)}$, $\Delta\theta_{dynamique(2)}$), for the execution of the learning step (h).

5.  The method according to any of claims 3 or 4 **characterized in that** the value representative of the relative angular position is measured by a « resolver » type angular position sensor (14) associated with the shaft of the steering assist motor (9).

6.  The method according to any of the preceding claims **characterized in that** the first model uses as the first dynamic parameter the speed difference (E) between the left and right wheels (5) of at least one running gear of the vehicle, the values of said speeds being preferably made available by an anti-lock braking system (15).

7.  The method according to any of the preceding claims **characterized in that** the second model uses as second dynamic parameter the yaw rate ($\psi$') of the vehicle and/or the lateral acceleration ($\gamma_{laterale}$) of said vehicle, said second parameter being preferably made available by a trajectory control system ESP (16).

8.  The method according to claims 3 and 7 **characterized in that** it includes a step (j) of detecting the direction of longitudinal movement of the vehicle, and a step (k) of detecting a steering condition which is beyond a predetermined steering threshold, and **in that** it comprises, when a steering operation is detected while reverse running, an inhibition step (i') which forces the zero setting, for executing the learning step, of the weighting coefficient ($pond_2(n)$) associated with the second dynamic offset value ($\Delta\theta_{dynamique(2)}(n)$) resulting from the application of the second model using as second dynamic parameter the yaw rate.

9.  A motor vehicle **characterized in that** it has an on-board computer (11) arranged or programmed to implement a method according to any one of claims 1 to 8.

10. A computer readable data medium (11) containing computer program code elements enabling the implementation of a method according to any one of claims 1 to 8 when said medium is read by a computer.

**Fig. 1**

**Fig. 2**

EP 2 870 052 B1

**(a)**

Angle 1

**(b)** Angle 2

Pondération initiale
" angle finding "

**(c,d)**

Vérification de la
cohérence entre
les angles

**(i)**

Pondération
intermédiaire

**(i')**

Inhibition de
l'apprentissage si
signal inhibition
actif

Pondération finale
" angle finding "

Vitesse de lacet   Ψ′

Couple colonne
direction

Vitesse véhicule

Détection de
marche arrière
et de braquage
prononcé

Signal
Inhibition

**(j,k)**

*Fig. 3*

14

**RÉFÉRENCES CITÉES DANS LA DESCRIPTION**

**Documents brevets cités dans la description**

- FR 2953181